# EUROPEAN PATENT SPECIFICATION

(11) **EP 0 781 018 B1**
(45) Date of publication and mention of the grant of the patent: **23.11.2005**
(21) Application number: 96203414.6
(22) Date of filing: 02.12.1996
(51) Int. Cl.: H04M 1/72, H04B 1/38

(54) **Mobile device for, by way of a radio link, setting up a telecommunication connection**
Mobile Vorrichtung zum Anbauen von einer Fernübertragungsverbindung mit einer Funkverbindung
Dispositif mobile pour l'établissement d'une connexion de télécommunication utilisant une liaison radio

(30) Priority: 21.12.1995 NL 1001967
(43) Date of publication of application: 25.06.1997
(73) Proprietor: Nokia Corporation, 02150 Espoo (FI)
(72) Inventor: Schmidt, Johan Richard, 2264 XZ Leidschendam (NL)
(74) Representative: Kaukonen, Juha Veikko

(56) References cited:
- EP-A- 0 577 296
- WO-A-92/08310
- FR-A- 2 706 103

## Description

### A. BACKGROUND OF THE INVENTION

The invention relates to a mobile device for, by way of a radio link, setting up a telecommunication connection for, by way of an established telecommunication connection, providing at least one telecommunication function, which device is provided with a high-frequency part and with a low-frequency part, which parts are detachably connected.

Such a mobile device is disclosed, e.g., in US 4,718,110 and relates to, e.g., a so-called handset. Such a handset provides at least one telecommunication function, such as, e.g., speech communication or data transport, and is provided with a separate high-frequency part and with a separate low-frequency part, in order to prevent signals present in the high-frequency part from causing interferences in the low-frequency part. In this connection, the being detachably connected of the parts has the advantage that both parts are easily replaceable.

Said known mobile device has the drawback, inter alia, that although handsets have been designed for a user to be capable of moving freely, in practice it turns out that particularly in objects the quality of the radio link is often poor, which in its turn restricts the mobility of the user to one location where the quality of the radio link is reasonable.

FR-A-2 706 103 describes a mobile device in which the microphone and the loudspeaker are arranged in a subunit which can be detached from the remaining of the device. The microphone unit communicates to the remaining by means of an optical or ultrasonic signals.

### B. SUMMARY OF THE INVENTION

The object of the invention is, inter alia, to provide a mobile device of the type referred to in the preamble, with which the mobility of the user is still guaranteed.

For this purpose, the mobile device according to the invention is characterised in that the high-frequency part and the low-frequency part are mutually coupled by way of at least one telecommunication coupling for, both in connected mode and in detached mode, providing the at least one telecommunication function.

By mutually coupling the high-frequency part and the low-frequency part by way of at least one telecommunication coupling for, both in connected mode and in detached mode, providing the at least one telecommunication function, the high-frequency part may be placed at a location where the quality of the radio link is good, while the user can still move relatively freely holding the low-frequency part. A simple embodiment of the telecommunication coupling might be realised by applying electrical wires. A more sophisticated solution makes use, in a manner known to those skilled in the art, of, e.g., infrared techniques or of ultrasonic techniques or even of radio-frequency techniques.

The invention is based, inter alia, on the insight that, particularly in objects such as buildings or trains, the locations where the quality of the radio link is good, such as, e.g., windows, often do not coincide with a location where a user desires to move freely. In addition, the invention is further based, inter alia, on the insight that a human user of a prior-art handset absorbs a significant portion of the power transmitted by the handset, which is not beneficial to the quality of the radio link. By possibly spatially separating the user and the high-frequency part from one another, said absorption of the transmitted power sharply decreases. This improves the quality of the radio link and reduces the energy consumption of the handset, and furthermore has the advantage that the user is much less exposed to the high-frequency radiation, which is beneficial to the user's health.

In this manner, the problem of the still poor mobility of a user of prior-art handsets is solved by a possible spatial separation of the high-frequency part and the low-frequency part, with the additional advantages that the quality of the radio link improves and the energy consumption decreases, and the user is less exposed to the high-frequency radiation.

The invention is defined by the claims.

A first embodiment of the mobile device is characterised in that the low-frequency part comprises a first subpart and a second subpart, which subparts are detachably connected and are mutually coupled by way of at least one further telecommunication coupling for, both in further connected mode and in further detached mode, providing the at least one telecommunication function.

By separating the low-frequency part into at least the first subpart and the second subpart, which subparts should be detachably connected and should be mutually coupled by way of at least one further telecommunication coupling for, both in further connected mode and in further detached mode, providing the at least one telecommunication function, it is achieved that different functionalities of the low-frequency part may be utilised from different locations, which sharply increases the user friendliness of the handset.

A second embodiment of the mobile device is characterised in that the high-frequency part is provided with an antenna and a transceiver coupled to the antenna, with the low-frequency part being provided with a loudspeaker, a microphone, a key pad and a display.

A third embodiment of the mobile device is characterised in that the first subpart is provided with the loudspeaker and the microphone, with the second subpart being provided with the key pad and the display.

A fourth embodiment of the mobile device is characterised in that the mobile device is provided with a power supply located in the high-frequency part.

By placing the power supply of the mobile device in the high-frequency part, said power supply is located there where the most power is required. By way of the telecommunication coupling and the further telecommunication coupling, power should then be fed to the low-frequency part.

A fifth embodiment of the mobile device is characterised in that the mobile device is provided with a power supply which is located in the second subpart.

By placing the power supply of the mobile device in the second subpart, which power supply often substantially determines the weight of the handset, the power supply is located there where the significant weight is most beneficial to the user friendliness, while the high-frequency part and the first subpart may then be implemented lightweight. By way of the telecommunication coupling and the further telecommunication coupling, power should then be fed to the high-frequency part and the first subpart.

A sixth embodiment of the mobile device is characterised in that the at least one telecommunication coupling is dimensioned for the providing, by the mobile device, of the at least one telecommunication function at a minimum distance between the high-frequency part and the low-frequency part of 50 cm.

A seventh embodiment of the mobile device is characterised in that the at least one further telecommunication coupling is dimensioned for the providing, by the mobile device, of the at least one telecommunication function at a minimum distance between the first subpart and the second subpart of 50 cm.

In US 5,265,158 it is disclosed to fabricate a handset modularly, in US 5,426,689 it is disclosed to provide a cordless handset with a so-called headset (headphone-microphone), and in FR 2,709,389 there is disclosed a so-called handsfree telephone set. In none of the said documents it is disclosed to provide a mobile device with a high-frequency part and with a low-frequency part, which parts are detachably connected, with the high-frequency part and the low-frequency part being mutually coupled by way of at least one telecommunication coupling for, both in connected mode and in detached mode, providing at least one telecommunication function.

### C. EXEMPLARY EMBODIMENT

The invention will be explained in greater detail by reference to an exemplary embodiment shown in the Figures. In this connection,
FIG. 1 shows a mobile device according to the invention in connected mode,
FIG. 2 shows a mobile device according to the invention in partly detached mode, and
FIG. 3 shows a mobile device according to the invention in fully detached mode.

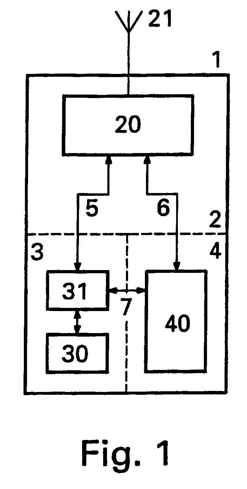

The mobile device shown in Figures 1, 2 and 3, such as, e.g., a handset 1, comprises a high-frequency part 2 and a low-frequency part 3,4. Said low-frequency part comprises a first subpart 4 and a second subpart 3. The high-frequency part 2 is provided with a transceiver 20 and an antenna 21 coupled to transceiver 20. The first subpart 4 of the low-frequency part 3,4 is provided with a loudspeaker/microphone 40. The second subpart 3 of the low-frequency part 3,4 is provided with a key pad/display 30 and with a processor 31 coupled to key pad/display 30. Transceiver 20 is coupled, by way of a coupling 5, to processor 31 and is coupled, by way of a coupling 6, to loudspeaker/microphone 40. Processor 31 is coupled, by way of a coupling 7, to loudspeaker/microphone 40.

The operation of the handset 1 shown in FIG. 1 is as follows. In connected mode, such as shown in FIG. 1, the high-frequency part 2 and the low-frequency part 3,4 form one whole, which is kept together, e.g., by way of a snap-in system not shown in the Figures. Transceiver 20 receives signals by way of antenna 21 which have a carrier-wave frequency of, e.g., 900 MHz or 1800 MHz. After reception, transceiver 20 demodulates said signals, whereafter signalling parts and/or data parts are fed to processor 31 by way of coupling 5 and/or audio parts are fed to loudspeaker/microphone 40 by way of coupling 6. In response to the signalling parts and/or data parts, processor 31 feeds signals to key pad/display 30 for displaying certain information and/or processor 31 feeds signals to loudspeaker/microphone 40 by way of coupling 7 for (de)activating and/or setting the loudspeaker and/or the microphone. Information originating from key pad/display 30 is fed to processor 31 which, in response to said information, feeds signals to loudspeaker/microphone 40 by way of coupling 7 for (de)activating and/or setting the loudspeaker and/or the microphone, and/or which, in response to said information, feeds signalling signals and/or data signals to transceiver 20 by way of coupling 5. Audio signals originating from loudspeaker/microphone 40 are fed, by way of coupling 6, to transceiver 20 which, if necessary, combines and then modulates and subsequently transmits the signalling signals and/or data signals and/or audio signals by way of antenna 21.

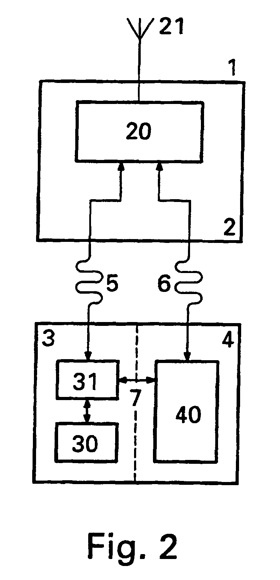

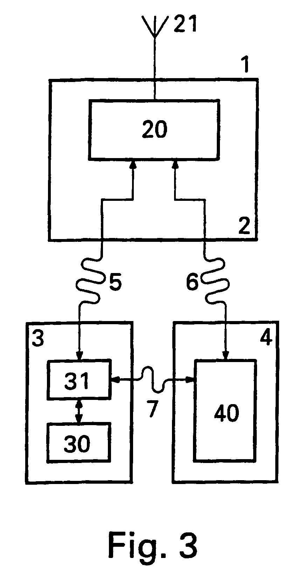

The operation of the handset 1 shown in the Figures 2 and 3 is as described above, with the exception of the following. Both in partly detached mode, as shown in FIG. 2, and in fully detached mode, as shown in FIG. 3, the high-frequency part 2 and the low-frequency part 3,4 no longer form one whole, but are spatially separated, while they are still mutually coupled by way of at least one telecommunication coupling, namely, coupling 5 and coupling 6. According to a simple embodiment, both couplings are ordinary electrical wires and, according to a more sophisticated embodiment, are based on, e.g., infrared techniques or ultrasonic techniques or radio-frequency techniques. In the event of couplings based on infrared techniques, both the high-frequency part 2 and the low-frequency part 3,4 should each be provided with an infrared transmitter not shown in the Figures and an infrared receiver not shown in the Figures. In the event of couplings based on ultrasonic techniques, both the high-frequency part 2 and the low-frequency part 3,4 should each be provided with an ultrasonic transmitter not shown in the Figures and an ultrasonic receiver not shown in the Figures. In the event of couplings based on radio-frequency techniques, both the high-frequency part 2 and the low-frequency part 3,4 should each be provided with a radio-frequency transmitter not shown in the Figures and a radio-frequency receiver not shown in the Figures.

The operation of the handset 1 shown in FIG. 3 is as described above, with the exception of the following. While in partly detached mode of handset 1, as shown in FIG. 2, the low-frequency part 3,4 forms one whole, the low-frequency part 3,4 in fully detached mode of handset 1, as shown in FIG. 3, consists of the first subpart 4 and the second subpart 3, which two subparts are spatially separated while they are still mutually coupled by way of at least one further telecommunication coupling, namely, either coupling 5 and coupling 6 or coupling 7. Just as couplings 5 and 6, coupling 7 according to a simple embodiment comprises one or more ordinary electrical wires, and coupling 7 according to a more sophisticated embodiment is based on, e.g., infrared techniques or ultrasonic techniques or radio-frequency techniques, with once again both the first subpart 4 and the second subpart 3 each having to be provided with a transmitter and a receiver.

Although the invention relates to a mobile device for setting up, by way of a radio link, a telecommunication connection for the benefit of at least one telecommunication function, which device is provided with a high-frequency part and with a low-frequency part which are detachably connected and which are mutually coupled by way of at least one telecommunication coupling for, both in connected mode and in detached mode, providing the at least one telecommunication function, the invention does not preclude that in practice different low-frequency parts are each capable of being coupled, by way of an own telecommunication coupling, to one and the same high-frequency part.

Of course, handset 1 disposes of a power supply not shown in the Figures. If said power supply, such as, e.g., a rechargeable battery, is placed in the high-frequency part 2, this has the advantage that said power supply is located there where the most power is required. By way of the couplings 5 and/or 6, power could then be fed to the low-frequency part 3,4. If said couplings 5 and/or 6 comprise electrical wires, the power is transmitted by way of, e.g., DC signals, while signalling signals and/or data signals and/or audio signals are transmitted by way of, e.g., AC signals or by way of modulation/ demodulation techniques. In the event of application of modulation/ demodulation techniques, there are of course required modulators and demodulators. Also, the low-frequency part 3,4 could be provided with at least one separate power supply (possibly per subpart), in which case no power need be fed from the high-frequency part 2 to the low-frequency part 3,4. Particularly in the event of couplings based on infrared techniques or ultrasonic techniques or radio-frequency techniques, transmitting power is very disadvantageous and very undesirable. If the power supply is placed in the second subpart 3, which power supply often substantially determines the weight of the handset, the power supply is located there where the significant weight is most beneficial to the user friendliness, while the high-frequency part 2 and the first subpart 4 may then be constructed lightweight. By way of the couplings 5 and/or 6 and/or 7, there could then be fed power to the high-frequency part 2 and to the first subpart 4, with the advantages and drawbacks and options discussed above for couplings implemented as wires and for cordlessly implemented couplings again being applicable.

## Claims

1. Mobile device for, by way of a radio link, setting up a telecommunication connection for, by way of an established telecommunication connection, providing at least one telecommunication function, which device is provided with a high-frequency part and with a low-frequency part, which parts are detachably connected, **characterised in that** the high-frequency part is provided with an antenna and a transceiver coupled to the antenna, with the low-frequency part being provided with a loudspeaker, a microphone, a key pad and a display, the high-frequency part and the low-frequency part being mutually coupled by way of at least one telecommunication coupling for, both in connected mode and in detached mode, providing the at least one telecommunication function.

2. Mobile device according to claim 1, **characterised in that** the low-frequency part comprises a first subpart and a second subpart, which subparts are detachably connected and are mutually coupled by way of at least one further telecommunication coupling for, both in further connected mode and in further detached mode, providing the at least one telecommunication function.

3. Mobile device according to claim 2, **characterised in that** the first subpart is provided with the loudspeaker and the microphone, with the second subpart being provided with the key pad and the display.

4. Mobile device according to claim 2, **characterised in that** the mobile device is provided with a power supply located in the second subpart.

5. Mobile device according to claims 2, 3 or 4, **characterised in that** the at least one further telecommunication coupling is dimensioned for the providing, by the mobile device, of the at least one telecommunication function at a minimum distance between the first subpart and the second subpart of 50 cm.

6. Mobile device according to any of the preceding claims, **characterised in that** the at least one telecommunication coupling is dimensioned for the providing, by the mobile device, of the at least one telecommunication function at a minimum distance between the high-frequency part and the low-frequency part of 50 cm.

7. Mobile device according to any of the preceding claims, **characterised in that** the mobile device is provided with a power supply located in the high-frequency part.

## Patentansprüche

1. Mobiles Gerät zum Aufbauen einer Telekommunikationsverbindung, mittels einer Funkstrecke, zum Bereitstellen zumindest einer Telekommunikationsfunktion mittels einer eingerichteten Telekommunikationsverbindung, wobei das Gerät mit einem Hochfrequenzteil und einem Niederfrequenzteil ausgestattet ist, die lösbar verbunden sind, **dadurch gekennzeichnet, dass** der Hochfrequenzteil mit einer Antenne und einem mit der Antenne gekoppelten Sende-Empfänger ausgestattet ist, wobei der Niederfrequenzteil mit einem Lautsprecher, einem Mikrophon, einem Tastenfeld und einer Anzeige ausgestattet ist, wobei der Hochfrequenzteil und der Niederfrequenzteil gegenseitig mittels zumindest einer Telekommunikationskopplung gekoppelt sind, um sowohl im verbunden Zustand als auch im gelösten Zustand die zumindest eine Telekommunikationsfunktion bereit zu stellen.

2. Mobiles Gerät nach Anspruch 1, **dadurch gekennzeichnet, dass** der Niederfrequenzteil ein erstes untergeordnetes Teil und ein zweites untergeordnetes Teil aufweist, wobei die untergeordneten Teile lösbar verbunden sind und gegenseitig mittels zumindest einer weiteren Telekommunikationskopplung gekoppelt sind, um sowohl in einem weiteren verbundenen Zustand und in einem weiteren gelösten Zustand die zumindest eine Telekommunikationsfunktion bereit zu stellen.

3. Mobiles Gerät nach Anspruch 2, **dadurch gekennzeichnet, dass** das erste untergeordnete Teil mit dem Lautsprecher und dem Mikrophon ausgestattet ist, wobei das zweite untergeordnete Teil mit dem Tastenfeld und der Anzeige ausgestattet ist.

4. Mobiles Gerät nach Anspruch 2, **dadurch gekennzeichnet, dass** das mobile Gerät mit einer in dem zweiten untergeordneten Teil befindlichen Energieversorgung ausgestattet ist.

5. Mobiles Gerät nach den Ansprüchen 2, 3 oder 4, **dadurch gekennzeichnet, dass** die zumindest eine weitere Telekommunikationskopplung dimensioniert ist für die Bereitstellung der zumindest einen Telekommunikationsfunktion durch das mobile Gerät in einem minimalen Abstand von 50cm zwischen dem ersten untergeordneten Teil und dem zweiten untergeordneten Teil.

6. Mobiles Gerät nach einem der vorhergehenden Ansprüche, **dadurch gekennzeichnet, dass** die zumindest eine Telekommunikationskopplung dimensioniert ist für die Bereitstellung der zumindest einen Telekommunikationsfunktion durch das mobile Gerät in einem minimalen Abstand von 50cm zwischen dem Hochfrequenzteil und dem Niederfrequenzteil.

7. Mobiles Gerät nach einem der vorhergehenden Ansprüche, **dadurch gekennzeichnet, dass** das mobile Gerät ausgestattet ist mit einer in dem Hochfrequenzteil befindlichen Energieversorgung.

## Revendications

1. Dispositif mobile pour établir une connexion de télécommunication en utilisant une liaison radiofréquentielle, pour fournir au moins une fonction de télécommunication en utilisant une connexion établie de télécommunication, ce dispositif comprenant une partie haute fréquence et une partie basse fréquence, ces parties étant reliées de façon détachable, **caractérisé en ce que** la partie haute fréquence comprend une antenne et un émetteur-récepteur couplés à l'antenne, la partie basse fréquence comprenant un haut-parleur, un microphone, une garniture principale et un écran d'affichage, la partie haute fréquence et la partie basse fréquence étant mutuellement couplées par au moins un couplage de télécommunication pour fournir au moins une fonction de télécommunication, à la fois en mode relié et en mode isolé.

2. Dispositif mobile selon la revendication 1, **caractérisé en ce que** la partie basse fréquence comprend une première sous partie et une deuxième sous partie, lesquelles sous parties sont reliées de façon détachable et sont mutuellement couplées par au moins un autre couplage de télécommunication pour fournir, à la fois dans un autre mode connecté et dans un autre mode isolé, au moins une fonction de télécommunication.

3. Dispositif mobile selon la revendication 2, **caractérisé en ce que** la première sous partie comprend le haut-parleur et le microphone, alors que la deuxième sous partie comprend la garniture principale et l'écran d'affichage.

4. Dispositif mobile selon la revendication 2, **caractérisé en ce que** le dispositif mobile comprend une alimentation de puissance située dans la deuxième sous partie.

5. Dispositif mobile selon les revendications 2, 3 ou 4, **caractérisé en ce que** le au moins un autre couplage de télécommunication est dimensionné pour fournir, par le dispositif mobile, la au moins une fonction de télécommunication à une distance minimum entre la première sous partie et la deuxième sous partie de 50 cm.

6. Dispositif mobile selon l'une quelconque des précédentes revendications, **caractérisé en ce que** le au moins un couplage de télécommunication est dimensionné pour fournir, par le dispositif mobile, la au moins une fonction de télécommunication à une distance minimum entre la partie haute fréquence et la partie basse fréquence de 50 cm.

7. Dispositif mobile selon l'une quelconque des précédentes revendications, **caractérisé en ce que** le dispositif mobile comprend une alimentation de puissance située dans la partie haute fréquence.
